# EUROPÄISCHE PATENTSCHRIFT

(11) **EP 3 180 178 B1**
(45) Veröffentlichungstag und Bekanntmachung des Hinweises auf die Patenterteilung: **04.09.2019**
(21) Anmeldenummer: 15742215.5
(22) Anmeldetag: 22.07.2015
(51) Int. Cl.: B29C 65/08, B29C 65/56, B29C 65/72, B29C 65/78, B29C 65/58, B29K 101/12

(54) **VERFAHREN ZUM HERSTELLEN EINER BAUTEILVERBINDUNG**
METHOD FOR PRODUCING A JOINT BETWEEN WORKPIECES
PROCÉDÉ D'ÉTABLISSEMENT D'UNE LIAISON ENTRE DES ÉLÉMENTS STRUCTURAUX

(30) Priorität: 13.08.2014 DE 102014216007
(43) Veröffentlichungstag der Anmeldung: 21.06.2017
(73) Patentinhaber: Bayerische Motoren Werke Aktiengesellschaft, 80809 München (DE)
(72) Erfinder: HAMMER, Maik, 84079 Bruckberg (DE); NIEKERK, Johann, 80993 München (DE); STEFANZIOSA, Clemens, 80539 München (DE)
(86) Internationale Anmeldenummer: PCT/EP2015/066756
(87) Internationale Veröffentlichungsnummer: WO 2016/023718

(56) Entgegenhaltungen:
- DE-B3-102012 221 698
- US-A- 4 865 680
- US-A- 4 865 687

## Beschreibung

Die vorliegende Erfindung betrifft ein Verfahren zum Herstellen einer Bauteilverbindung gemäß dem Oberbegriff des Patentanspruches 1.

Ein derartiges Verfahren ist aus der US 4 865 680 A bekannt. Zum technischen Hintergrund der Erfindung zählt die US 4 865 687 A.

Aus der DE 10 2012 221 698 B3 ist eine Bauteilverbindung bekannt, bei der auf ein erstes Bauteil eine Stahlkugel aufgeschweißt ist. Ein mit dem ersten Bauteil zu verbindendes zweites Bauteil weist ein Durchgangsloch auf und wird so an das erste Bauteil angelegt, dass die von dem ersten Bauteil abstehende Kugel zumindest ein Stück weit durch das Durchgangsloch des zweiten Bauteils hindurch ragt. Anschließend wird auf die Kugel ein zweiteiliger Kunststoff-Clip aufgeclipst, der das in dem zweiten Bauteil vorgesehene Durchgangsloch überkragt und die beiden Bauteile zusammenklemmt.

Aufgabe der Erfindung ist es, ein Verfahren zum Herstellen einer modifizierten Bauteilverbindung anzugeben, um dadurch ein weiteres Anwendungsfeld zu erschließen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein erstes Bauteil, das mit einem zweiten Bauteil verbunden werden soll. Zumindest ein Teilbereich einer Oberfläche des ersten Bauteils besteht aus einem thermoplastischen Kunststoffmaterial. Selbstverständlich kann das gesamte erste Bauteil aus einem thermoplastischen Kunststoffmaterial bestehen. Dies muss aber nicht so sein. Vielmehr kann es auch sein, dass ein "Kern" des ersten Bauteils aus einem anderen Material besteht und der Kern oder ein Teil des Kerns mit einem thermoplastischen Kunststoffmaterial beschichtet oder überzogen ist. Bei dem thermoplastischen Kunststoffmaterial des ersten Bauteils kann es sich um ein faserverstärktes thermoplastisches Kunststoffmaterial handeln. Die Fasern bzw. Partikel sind in dem thermoplastischen Kunststoffmaterial verteilt. Als Fasern in Betracht kommen z.B. Glasfasern, Kohlenstofffasern, Aramidfasern o.ä. Hinsichtlich der Faserlänge können Langfasern, Kurzfasern oder sog. Endlosfasern oder Kombination derselben verwendet werden.

Auf das erste Bauteil bzw. auf das thermoplastische Kunststoffmaterial des ersten Bauteils wird mindestens eine Kugel durch Ultraschall-Schweißen aufgeschweißt. Die Kugel zeichnet sich dadurch aus, dass zumindest ein Teilbereich ihrer Oberfläche aus einem thermoplastischen Kunststoffmaterial besteht.

Bei der Kugel kann es sich insbesondere um eine Vollkugel aus thermoplastischem Kunststoffmaterial handeln. Alternativ dazu kann es sich bei der Kugel auch um eine Hohlkugel aus einem thermoplastischen Kunststoffmaterial handeln. Ferner ist denkbar, dass die Kugel einen Kugelkern aufweist, der zumindest teilweise mit einem thermoplastischen Kunststoffmaterial überzogen bzw. beschichtet ist. Der Kugelkern kann z.B. aus Stahl, Aluminium, Glas, Blei o.ä. bestehen. Dadurch können spezifische Eigenschaften des Kugelkerns (der z.B. magnetisch sein kann) mit Eigenschaften der thermoplastischen Beschichtung (Schweißbarkeit mit Bauteilen oder Substraten) kombiniert werden. Bei dem thermoplastischen Kunststoffmaterial der Kugel kann es sich um einen faser- oder partikelverstärkten Kunststoff handeln, was die Festigkeit der Schweißverbindung zwischen der Kugel und dem ersten Bauteil erhöht.

Vor dem Verschweißen der Kugel mit dem ersten Bauteil wird die Kugel an das erste Bauteil angedrückt, derart, dass das thermoplastische Kunststoffmaterial der Kugel an dem thermoplastischen Kunststoffmaterial des ersten Bauteils anliegt.

Anschließend wird die Kugel mittels einer Ultraschall-Sonotrode in Schwingungen versetzt, was zu einem lokalen Aufschmelzen des Materials der Kugel und/oder des Materials des ersten Bauteils im Berührbereich und somit zu einem Verschmelzen der beiden Materialien, d.h. zu einem Verschweißen der Kugel mit dem ersten Bauteil führt. Aufgrund der konvexen Geometrie der Kugel entsteht im Berührbereich zwischen der Kugel und dem ersten Bauteil eine extrem hohe Energiedichte, die zu einem sauberen, lokal begrenzten Aufschmelzen von Kugelmaterial und Material des ersten Bauteils und somit im Ergebnis zu einer sehr sauberen, hochwertigen und festen Schweißverbindung führt.

Das oben bereits erwähnte zweite Bauteil weist ein Durchgangsloch auf und wird so an das erste Bauteil herangeführt, dass die von dem ersten Bauteil abstehende Kugel in das Durchgangsloch des zweiten Bauteils hinein ragt oder ein Stück weit durch das Durchgangsloch des zweiten Bauteils hindurch ragt.

Anschließend wird ein Clip-Element, das z.B. aus einem elastischen Kunststoffmaterial bestehen kann, auf die Kugel aufgeclipst. Das Clip-Element überkragt das Durchgangsloch und verbindet somit die beiden Bauteile formschlüssig und/oder kraftschlüssig miteinander. Wenn das Clip-Element bzw. ein das Durchgangsloch überkragender Rand des Clip-Elements elastisch ausgebildet ist, kann durch das Clip-Element sogar eine dauerhafte Verspannung zwischen dem ersten Bauteil und dem zweiten Bauteil erreicht werden.

Die Erfindung ist in einer nahezu unbegrenzten Vielzahl von Gebieten anwendbar. Die Erfindung ist insbesondere im Bereich des Fahrzeugbaus, und dort insbesondere im Bereich des Karosseriebaus anwendbar. Somit kann es sich bei dem ersten und/oder dem zweiten Bauteil um ein Fahrzeugbauteil, insbesondere um ein Karosseriebauteil eines Fahrzeugs handeln.

Nach einer Weiterbildung der Erfindung weist das erste Bauteil, an der Stelle, an der die Kugel durch Ultraschall-Schweißen auf das erste Bauteil aufgeschweißt werden soll, eine "physische Markierung" auf, die eine exakte Positionierung der Kugel in Bezug auf das erste Bauteil erleichtert. Eine solche physische Markierung kann bspw. durch eine muldenartige Vertiefung, insbesondere durch eine kugelkalottenartige muldenartige Vertiefung, eine fadenkreuzartige Vertiefung o.ä. gebildet sein.

Nach einer Weiterbildung wird auf die dem zweiten Bauteil zugewandte Seite des ersten Bauteils und/oder auf die dem ersten Bauteil zugewandte Seite des zweiten Bauteils oder einfach zwischen die beiden Bauteile eine Kleberschicht eingebracht, welche die beiden Bauteile zusätzlich zu dem Clip-Element stoffschlüssig miteinander verbindet.

Nach einer Weiterbildung der Erfindung erzeugt die Sonotrode nach dem "Einschalten" der Sonotrode translatorische und/oder torsionale Schwingungen, welche sich auf die Kugel übertragen.

Bei einem Klebstoffauftrag kann vorgesehen sein, dass der für die Aufnahme des Klebstoffs erforderliche Spalt zwischen den beiden Bauteilen durch das Clip-Element ermöglicht bzw. sogar sichergestellt wird. Das Clip-Element stellt nach dem Zusammenclipsen der beiden Bauteile eine "Handling-Festigkeit" sicher, auch wenn der Kleberstoff noch nicht ausgehärtet ist. Die beiden durch das Klebelement zusammengeclipsten Bauteile können somit auch bei noch nicht ausgehärtetem Kleberstoff weiter bearbeitet bzw. weiter transportiert werden.

Nach einer Weiterbildung der Erfindung wird die Kugel mittels einer in die Sonotrode integrierten oder an der Sonotrode angeordneten Ansaugeinrichtung angesaugt. Mittels einer derartigen Ansaugeinrichtung kann die Kugel aus einem Kugelreservoir bzw. aus einem Vorratsbehälter, der mit einer Vielzahl von Kugeln gefüllt ist, angesaugt, entnommen und an das erste Bauteil herangeführt werden. Zur Fixierung mittels Unterdruck kann an einer Stirnseite der Sonotrode eine muldenartige Aufnahme vorgesehen sein, in welche die Kugel mittels der Ansaugeinrichtung angesaugt bzw. eingesaugt wird.

Die Sonotrode kann als Handgerät ausgebildet sein. Dementsprechend kann die Kugel von Hand mittels der Sonotrode an das erste Bauteil herangeführt und mit dem ersten Bauteil verschweißt werden. Alternativ dazu kann das Entnehmen einer Kugel aus einem Kugelreservoir, das Heranführen der Kugel an das erste Bauteil und das Verschweißen der Kugel mit dem ersten Bauteil auch vollautomatisiert werden, indem die Sonotrode von einem Industrie-Roboter gesteuert und bewegt wird.

Das Aufclipsen des Clip-Elements auf die Kugel kann wahlweise von Hand oder automatisiert mittels einer Clip-Setzeinrichtung erfolgen.

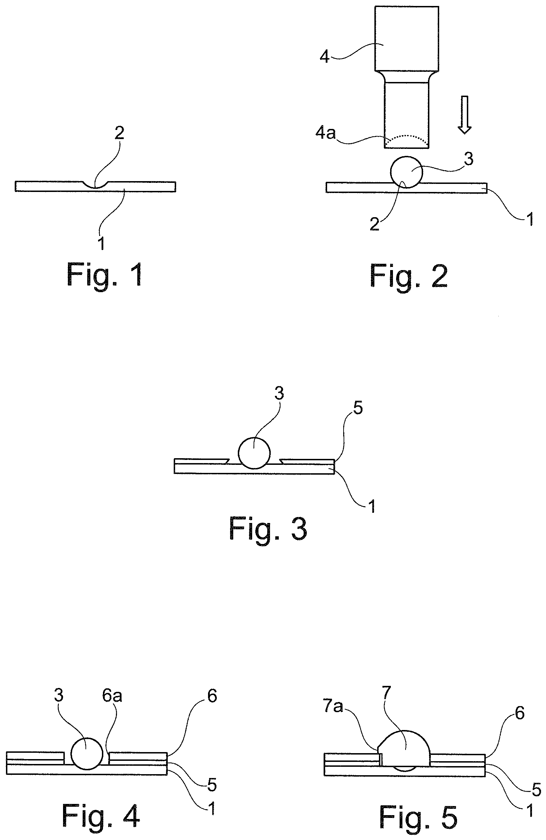

Im Folgenden wird die Erfindung im Zusammenhang mit der Zeichnung näher erläutert. Die Fig. 1-5 zeigen einzelne Schritte des erfindungsgemäßen Verfahrens.

Fig. 1 zeigt ein platinenartiges, d.h. im Wesentlichen ebenes erstes Bauteil 1, welches eine kugelkalottenförmige oder muldenartige Vertiefung 2 aufweist. Das erste Bauteil 1 kann vollständig aus thermoplastischem Material bestehen oder zumindest im Bereich der muldenartigen Vertiefung 2 mit einem thermoplastischen Material beschichtet oder überzogen sein.

Wie aus Fig. 2 ersichtlich ist, wird in die muldenartige Vertiefung 2 eine Kugel 3 eingebracht. Die Kugel 3 ragt somit zumindest zu einem Teil in die muldenartige Vertiefung 2 hinein. Die muldenartige Vertiefung 2 wirkt als "physische Markierung". Die Kugel 3 wird somit durch die Vertiefung 2 in einer vordefinierten Weise in Bezug auf das erste Bauteil 1 positioniert.

Die Kugel 3 kann bspw. von Hand in die Vertiefung 2 eingelegt werden. Alternativ dazu kann die Kugel 3 auch mittels einer Zuführeinrichtung, z.B. eines Roboters (nicht dargestellt) in die Vertiefung 2 eingebracht werden. Mittels einer hier nur schematisch dargestellten Ultraschall-Sonotrode 4 wird die Kugel 3 in Ultraschall-Schwingungen (z.B. in translatorische und/oder torsionale Schwingungen) versetzt und mit dem thermoplastischen Material des ersten Bauteils 1 und somit mit dem ersten Bauteil 1 verschweißt.

Die Kugel 3 kann ebenfalls aus thermoplastischem Material bestehen. Sie muss aber nicht vollständig aus thermoplastischem Material bestehen. Denkbar ist, dass die Kugel 3 lediglich im Berührbereich mit der Vertiefung 2 mit einem thermoplastischen Material beschichtet oder überzogen ist. Selbstverständlich kann die Kugel aber auch eine aus einem nichtthermoplastischen Material bestehenden Kugelkern aufweisen, der vollständig mit einer Oberflächenschicht aus thermoplastischem Material überzogen ist.

Das Zuführen der Kugel in die Vertiefung 2 kann auch über die Sonotrode erfolgen. Im Bereich einer Stirnseite der Sonotrode 4 kann hierzu eine muldenartige Vertiefung vorgesehen sein, in welche ein Ansaugkanal mündet. Mittels einer hier nicht näher dargestellten Ansaugeinrichtung, die z.B. in die Sonotrode 4 integriert sein kann, kann die Kugel 3 in die muldenartige Vertiefung 4a der Sonotrode eingesaugt bzw. hieran angesaugt werden. Somit kann die Kugel 3 durch Verfahren der Sonotrode relativ zu dem ersten Bauteil 1 positioniert und in die Vertiefung 2 des ersten Bauteils eingebracht werden. Die Sonotrode kann hierbei von Hand oder automatisiert gesteuert durch einen Industrie-Roboter bewegt werden.

Durch in Schwingung Versetzen der Kugel 3 schmilzt thermoplastisches Material der Kugel 3 und/oder thermoplastisches Material der Vertiefung 2 lokal begrenzt auf und verschmilzt miteinander. Dadurch wird die Kugel 3 mit dem ersten Bauteil 1 verschweißt. Aufgrund der konvexen Geometrie der Kugel entsteht im Berührbereich zwischen der Kugel und dem ersten Bauteil eine sehr hohe Energiedichte, die zu einem sauberen, lokal begrenzten Aufschmelzen des thermoplastischen Materials der Kugel 3 bzw. des ersten Bauteils 1 führt.

Wie in Fig. 3 dargestellt ist, wird auf eine Oberseite des ersten Bauteils 1 eine Kleberschicht 5 aufgetragen.

Anschließend wird, wie in Fig. 4 dargestellt, auf die Kleberschicht 5 ein zweites Bauteil 6 aufgebracht, welches ein Durchgangsloch 6a aufweist. Das zweite Bauteil 6 ist so in Bezug auf das erste Bauteil 1 bzw. die Kugel 3 angeordnet, dass die Kugel 3 in das Durchgangsloch 6a des zweiten Bauteils 6 hinein ragt bzw. hier sogar ein Stück weit durch das Durchgangsloch 6a hindurch ragt.

Anschließend wird ein Clip-Element 7 auf die Kugel 3 aufgeclipst. Das Clip-Element 7 überkragt hier mit einer Rastnase 7a, welche an dem zweiten Bauteil 6 anliegt, das Durchgangsloch 6a des zweiten Bauteils. Durch das (elastische) Clip-Element 7 werden die beiden Bauteile (6, 1) zusammengehalten bzw. gegeneinander gedrückt. Die beiden Bauteile 1, 6 können somit auch bei noch nicht ausgehärtetem Kleberstoff 5 weiter transportiert bzw. sogar bereits weiter verarbeitet werden.

## Patentansprüche

1. Verfahren zum Herstellen einer Bauteilverbindung (1, 3, 6), mit folgenden Schritten:
- Bereitstellen eines ersten Bauteils (1), das zumindest im Bereich eines Teils seiner Oberfläche aus einem thermoplastischen Kunststoffmaterial besteht,
- Bereitstellen einer Kugel (3), die zumindest in einem Bereich ihrer Oberfläche aus einem thermoplastischen Kunststoffmaterial besteht,
- Andrücken der Kugel (3) an das erste Bauteil (1), derart, dass das thermoplastische Kunststoffmaterial der Kugel (3) an dem thermoplastischen Kunststoffmaterial des ersten Bauteils (1) anliegt,
- in Schwingungen Versetzen der Kugel (3) mittels einer Ultraschall-Sonotrode (4) und Verschweißen der Kugel (3) mit dem ersten Bauteil (1),
- Bereitstellen eines zweiten Bauteils (6), welches ein Durchgangsloch (6) aufweist,
- Heranführen des zweiten Bauteils (6) an das erste Bauteil (1), derart, dass die Kugel (3) zumindest in das Durchgangsloch (6a) des zweiten Bauteils (6) hinein ragt oder ein Stück weit durch das Durchgangsloch (6a) hindurch ragt,
**dadurch gekennzeichnet, dass**
- ein Clip-Element (7) auf die Kugel (3) aufgeclipst wird, wobei das Clip-Element (7) das Durchgangsloch (6a) überkragt und die beiden Bauteile (1, 6) formschlüssig und/oder kraftschlüssig miteinander verbindet.

2. Verfahren nach Anspruch 1, **dadurch gekennzeichnet, dass** das erste Bauteil (1) eine physische Markierung, insbesondere eine muldenartige Vertiefung (2) aufweist, oder dass eine derartige physische Markierung in dem ersten Bauteil (1) erzeugt wird, wobei die Kugel (3) mittels der physischen Markierung (2) relativ zu dem ersten Bauteil (1) positioniert wird.

3. Verfahren nach Anspruch 1 oder 2, **dadurch gekennzeichnet, dass** zwischen die beiden Bauteile (1, 6) eine Kleberschicht (5) eingebracht bzw. eine Kleberschicht (5) auf eine dem zweiten Bauteil (6) zugewandte Seite des ersten Bauteils (1) oder auf eine dem ersten Bauteil (1) zugewandte Seite des zweiten Bauteils (6) aufgebracht wird.

4. Verfahren nach einem der Ansprüche 1 bis 3, **dadurch gekennzeichnet, dass** die Kugel (3) mittels der Ultraschall-Sonotrode (4) in translatorische Schwingungen versetzt wird.

5. Verfahren nach einem der Ansprüche 1 bis 4, **dadurch gekennzeichnet, dass** die Kugel (3) mittels der Ultraschall-Sonotrode in torsionale Schwingungen versetzt wird.

6. Bauteilverbindung, hergestellt nach einem Verfahren eines der Ansprüche 1 bis 5.

## Claims

1. A method for producing a component connection (1, 3, 6), having the following steps:
- providing a first component (1) which at least in the region of part of its surface consists of a thermoplastic plastics material,
- providing a sphere (3) which at least in one region of its surface consists of a thermoplastic plastics material,
- pressing the sphere (3) against the first component (1) such that the thermoplastic plastics material of the sphere (3) lies against the thermoplastic plastics material of the first component (1),
- setting the sphere (3) to vibrate by means of an ultrasonic sonotrode (4) and welding the sphere (3) to the first component (1),
- providing a second component (6) which has a through-hole (6),
- bringing the second component (6) up to the first component (1) such that the sphere (3) projects at least into the through-hole (6a) of the second component (6) or slightly protrudes through the through-hole (6a),
**characterised in that**
- a clip element (7) is clipped onto the sphere (3), wherein the clip element (7) projects across the through-hole (6a) and connects the two components (1, 6) together in a positively and/or non-positively locking manner.

2. A method according to Claim 1, **characterised in that** the first component (1) has a physical marking, especially a trough-like indentation (2), or **in that** such a physical marking is produced in the first component (1), the sphere (3) being positioned relative to the first component (1) by means of the physical marking (2).

3. A method according to Claim 1 or Claim 2, **characterised in that** a layer of adhesive (5) is introduced between the two components (1, 6) or a layer of adhesive (5) is applied to a side of the first component (1) which faces the second component (6) or to a side of the second component (6) which faces the first component (1).

4. A method according to one of Claims 1 to 3, **characterised in that** the sphere (3) is set into translatory vibrations by means of the ultrasonic sonotrode (4).

5. A method according to one of Claims 1 to 4, **characterised in that** the sphere (3) is set into torsional vibrations by means of the ultrasonic sonotrode.

6. A component connection, produced according to a method of one of Claims 1 to 5.

## Revendications

1. Procédé d'obtention d'une liaison de pièces (1, 3, 6) comprenant les étapes suivantes consistant à :
- se procurer une première pièce (1) qui, au moins dans la zone d'une partie de sa surface est réalisée en un matériau synthétique thermoplastique,
- se procurer une sphère (3) qui, au moins dans une zone de sa surface est réalisée en un matériau synthétique thermoplastique,
- comprimer la sphère (3) contre la première pièce (1) de sorte que le matériau synthétique thermoplastique de la sphère (3) s'applique contre le matériau synthétique thermoplastique de la première pièce (1),
- faire vibrer la sphère (3) au moyen d'une sonotrode à ultrasons (4) et souder la sphère (3) avec la première pièce (1),
- se procurer une seconde pièce (6) comportant un perçage traversant (6),
- positionner la seconde pièce (6) sur la première pièce (1) de sorte que la sphère (3) pénètre au moins dans le perçage traversant (6a) de la seconde pièce (6) ou pénètre dans une certaine mesure au travers du perçage traversant (6a),
**caractérisé en ce que**
- un élément de clipsage (7) est clipsé sur la sphère (3), l'élément de clipsage (7) en serrant le perçage traversant (6a) et reliant l'une à l'autre les deux pièces (1, 6) par une liaison par la forme et/ou par une liaison par la force.

2. Procédé conforme à la revendication 1,
**caractérisé en ce que**
la première pièce (1) comporte un marquage physique, en particulier un renfoncement (2) en forme d'auge, ou un tel marquage physique est produit dans la première pièce (1), la sphère (3) étant positionnée par rapport à la première pièce (1) au moyen du marquage physique (2).

3. Procédé conforme à la revendication 1 ou 2,
**caractérisé en ce qu'**
entre les deux pièces (1, 6) est appliquée une couche de colle (5), ou, une couche de colle (5) est appliquée sur le côté de la première pièce (1) tourné vers la seconde pièce (6) ou sur le côté de la seconde pièce (6) tourné vers la première pièce (1).

4. Procédé conforme à l'une des revendications 1 à 3,
**caractérisé en ce que**
la sphère (3) est mise en vibrations de translation au moyen de la sonotrode à ultrasons (4).

5. Procédé conforme à l'une des revendications 1 à 4,
**caractérisé en ce que**
la sphère (3) est mise en vibrations de torsion au moyen de la sonotrode à ultrasons.

6. Liaison de pièces obtenue par la mise en oeuvre du procédé conforme à l'une des revendications 1 à 5.
